# EUROPEAN PATENT APPLICATION

(11) **EP 4 718 037 A1**
(43) Date of publication of application: **01.04.2026**
(21) Application number: 23938575.0
(22) Date of filing: 12.12.2023
(51) Int. Cl.: G01D 5/20

(54) **RESOLVER SIGNAL DETECTION CIRCUIT AND DETECTION METHOD THEREFOR**

(30) Priority: 21.05.2023 JP 2023083551
(71) Applicant: Atsense Inc., Tokyo 162-0812 (JP)
(72) Inventor: OZAWA, Yuya, Tokyo 162-0812 (JP)
(74) Representative: Hafner & Kohl PartmbB
(86) International application number: PCT/JP2023/044435
(87) International publication number: WO 2024/241614

(57) **Abstract**

[Problem] An angle signal can be separated and detected without affecting existing control resolver signals and used outside a resolver unit.

[Solution] A resolver signal detection circuit 100 comprises: multiple pairs of branch lines 5c,5d;6c,6d;7c,7d branched between a resolver 80 and a resolver digital converter 90; a detection circuit 10 that inputs a pair of angle signals as a differential input signal from an output coil 6, 7 of the resolver 80 via at least one pair of output branch lines 6c, 6d; 7c, 7d of the multiple pairs of branch lines 5c, 5d; 6c, 6d; 7c, 7d and that outputs a single-ended signal; an inverting amplifier circuit 20 to amplify or attenuate the single-ended signal from the detection circuit 10; a low-pass filter circuit 30 to denoise from the single-ended signal amplified or attenuated by the inverting amplifier circuit 20; and a differential output circuit 40 to convert the single-ended signal denoised by the low-pass filter circuit 30 into a differential signal to be output.

## Description

### TECHNICAL FIELD

This invention relates to a resolver signal detection circuit and a method for detecting resolver signals that separate and detect information of a rotation angle from a resolver unit to measure the rotation angle of an electric motor without affecting existing resolver signals for controlling the electric motor.

### BACKGROUND TECHNOLOGY

Recently, in the increasingly serious environmental problems such as air pollution and global warming caused by exhaust emissions from gasoline-powered vehicles, an electric vehicle (EV) is rapidly gaining popularity. The electric vehicle is moved by driving the electric motor with electric energy from an on-board battery, and the speed of electric vehicle is controlled by controlling a rotation of the electric motor. In order to efficiently control the rotation of the electric motor, it is necessary to accurately measure the rotation angle, and a resolver is known as a device (rotation angle sensor) for measuring the rotation angle.

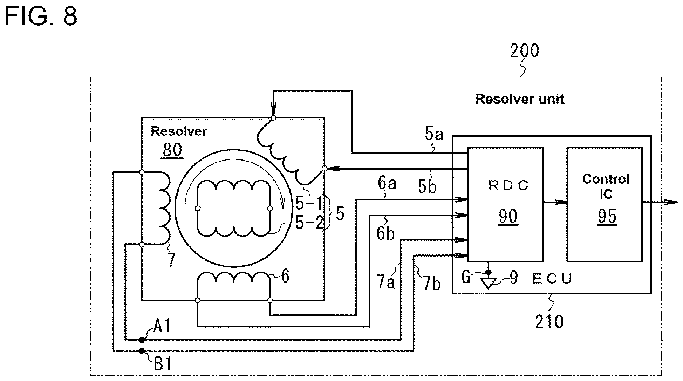

FIG. 8 illustrates a resolver unit 200 comprising a 1-phase excitation 2-phase output resolver 80, a resolver digital converter (RDC) 90, and a control IC 95. An excitation coil 5 of the resolver 80 comprises: a primary excitation coil 5-1 provided in a stator (fixed element) that a differential AC signal (an excitation signal) in an arbitrary frequency is supplied from the RDC90 via signal lines 5a,5b; and secondary excitation coils 5-2 provided in a rotor (rotating element) coaxially connected to a motor, and the secondary excitation coils 5-2 are magnetically connected to the primary excitation coil 5-1 and generate AC signals. A sine-wave coil 6 of the resolver 80 is provided in the stator, and receives a carrier wave of the same frequency as the excitation signal from the secondary excitation coil 5-2, and outputs via signal lines 6a, 6b to the RDC90 a sine-wave signal (including sine and carrier waves) carrying on the carrier wave the sine wave corresponding to the rotation angle of the rotor. A cosine-wave coil 7 of the resolver 80 is provided in the stator, and receives the carrier wave of the same frequency as the excitation signal from the secondary excitation coil 5-2, and outputs via signal lines 7a,7b to the RDC 90 a cosine-wave signal (including cosine and carrier waves) carrying on the carrier wave the cosine wave that corresponds to the rotation angle of the rotor, and the cosine wave is substantially 90° phases shifted from the sine wave of the sine-wave signal.

The RDC 90 shown in FIG. 8 calculates the rotation angle and speed of the motor based on the differential AC signal in the arbitrary frequency supplied to the excitation coil 5 of the resolver 80 and the sine-wave and cosine-wave signals output from the sine-wave and cosine-wave coils 6, 7, and then outputs the rotation angle and speed as a digital signal to the control IC 95. Based on the digital signal of rotation angle and speed input from the RDC 90, the control IC 95 transmits a control signal to an inverter not shown to control the rotation speed of the motor.

Motor developers of the electric vehicles (including hybrid vehicles, plug-in hybrid vehicles, and electric motorcycles) have situations that they want to detect and analyze resolver signals separately from the resolvers of their or other companies' motors for the research and development and benchmarking (to build an index for performance comparison). However, the RDC 90 and control IC 95 are usually integrated as an engine control unit (ECU) 210 as shown in FIG. 8, and the resolver signals cannot be nondestructively separated from the ECU 210 and detected at an outside of the resolver unit 200. Also, it is unknown what control processes are executed in the black-boxed ECU 210. Specifically, it is unknown what control signal waveform is output from the inverter to the motor based on what resolver signals or what rotation angle.

A waveform measuring device in Patent Document 1, as a prior art for separately detecting resolver signals, comprises: a zero-crossing detection part to detect a zero-crossing of excitation signal input into a resolver; a hold part to hold an angle detection signal that an amplitude is changed according to a rotation angle output by the resolver after Δt since detecting the zero-crossing; and an angle calculation part to calculate the rotation angle based on the held angle detection signal. Patent Document 1 illustrates the waveform measuring device that branches the resolver signals (excitation signal, first detection signal, and second detection signal) from between the resolver and the ECU by means of each single line, but does not disclose the specific configuration for the branching.

A branch line as the single line as in Patent Document 1 is required that a ground of the branch line is in common with that of the resolver and the ECU, and this case generates noise to adversely affect to the resolver signals (the control resolver signals) for controlling a motor. In addition, a simple branching of the control resolver signals would result in insufficient electric current for the control resolver signals due to the increased lines, and made it impossible to accurately measure the rotation angle by the existing ECU. In other words, the waveform measuring device in Patent Document 1 cannot separate and detect the resolver signals without adversely affecting the existing rotation angle measurement.

On the other hand, a method using a differential probe would be considered for separating and detecting a waveform of resolver signals via a pair of signal lines 5a,5b;6a,6b;7a,7b between the resolver 80 and the RDC 90. The differential probe is a device that transmits a differential voltage signal between two points to a waveform measuring device such as an oscilloscope from two probes via transmission lines connected to the two probes. However, since a pair of differential inputs of the differential probe is connected to a ground via a resistor at an inside of the differential probe, noise may generate depending on resistance value of the resistor, and this effect cannot make the waveform of the resolver signals to be measured accurately.

As mentioned above, even if attempting to separate and detect angle information from the resolver, it has conventionally been impossible to separate and detect the resolver signals from the RDC in the integrated ECU. In other words, in the prior art waveform measuring device of simple branching only from the signal line of the existing resolver unit, the control resolver signals are affected by the noise and impedance due to the branching means, and the RDC detects errors. In addition, the detection by the differential probe cannot accurately measure the waveform of the resolver signals due to noise. In other words, the prior art could not separate and detect the angle signal outside the existing resolver unit while operating the existing resolver unit.

### CITATION LIST

### PATENT LITERATURE

Patent Document 1: JP-A-2013-127409

### SUMMARY OF INVENTION

### TECHNICAL PROBLEM

Accordingly, the purpose of this invention is to provide a resolver signal detection circuit and a method for detecting resolver signals that can be utilized outside a resolver unit by separating and detecting an angle signal without affecting control resolver signals from an existing resolver unit.

### SOLUTION TO PROBLEM

A resolver signal detection circuit of the present invention comprises: multiple pairs of branch lines 5c, 5d; 6c, 6d; 7c, 7d branched from between a resolver 80 and a resolver digital converter 90; the resolver 80 comprising an excitation coil 5 and an output coil 6,7, and the resolver digital converter 90 receiving from the resolver 80 an angle signal corresponding to a rotation angle of a motor; a detection circuit 10 that inputs a pair of angle signals as a differential input signal from the output coil 6,7 of the resolver 80 via at least one pair of output branch lines 6c, 6d; 7c, 7d of the multiple pairs of branch lines 5c, 5d; 6c, 6d; 7c, 7d, and that outputs a single-ended signal; an inverting amplifier circuit 20 connected to the detection circuit 10 and amplifying or attenuating the single-ended signal from the detection circuit 10; a low-pass filter circuit 30 connected to the inverting amplifier circuit 20 and removing noise from the single-ended signal amplified or attenuated by the inverting amplifier circuit 20; and a differential output circuit 40 connected to the low-pass filter circuit 30 and converting the single-ended signal noise-removed by the low-pass filter circuit 30 into a differential output signal that is output from the differential output circuit 40.

In the resolver signal detection circuit 100, the angle signal is separated and detected as the pair of differential signals via the pair of output branch lines 6c, 6d; 7c, 7d by the detection circuit 10 instead of as a single line based on an electric potential of a ground 9 of a resolver unit 200 (a resolver 80 and a resolver digital converter 90). As a result, the present invention is capable of separating and detecting the angle signal from the resolver 80 at an outside of the resolver unit 200 with high accuracy while maintaining the resolver 80 and the resolver digital converter 90 in a normal operation, without having any negative effect, such as current drop and noise, on the control resolver signals in the resolver unit 200.

In an embodiment of the resolver signal detection circuit 100, the multiple pairs of branch lines 5c, 5d; 6c, 6d; 7c, 7d include a pair of excitation branch lines 5c, 5d to branch an excitation signal that is input from the resolver digital converter 90 into the excitation coil 5, and the excitation signal is input into the detection circuit 10 as the differential input signal from the resolver digital converter 90 via the pair of excitation branch lines 5c,5d.

The output coils 6,7 comprise: a sine-wave coil 6 to output a sine-wave signal as the angle signal; and a cosine-wave coil 7 to output a cosine-wave signal as the angle signal that is substantially 90° phase shifted from the sine-wave signal of the sine-wave coil 6; and the multiple pairs of branch lines 5c, 5d; 6c, 6d; 7c, 7d comprise: a pair of excitation branch lines 5c, 5d to branch an excitation signal that is input from the resolver digital converter 90 into the excitation coil 5; a pair of sine-wave branch lines 6c, 6d as the pair of output branch lines to branch the sine-wave signal that is input from the sine-wave coil 6 into the resolver digital converter 90; and a pair of cosine-wave branch lines 7c,7d as the pair of output branch lines to branch the cosine-wave signal that is input from the cosine-wave coil 7 into the resolver digital converter 90.

The detection circuit 10 comprises: a first detection circuit 10 connected to the excitation coil 5 via the pair of excitation branch lines 5c, 5d; a second detection circuit 10 connected to the sine-wave coil 6 via the pair of sine-wave branch lines 6c,6d; and a third detection circuit 10 connected to the cosine-wave coil 7 via the pair of cosine-wave branch lines 7c, 7d; and the first detection circuit 10 is connected in series with a first inverting amplifier circuit 20, a first low-pass filter circuit 30, and a first differential output circuit 40 to form an excitation processing unit 105; and the second detection circuit 10 is connected in series with a second inverting amplifier circuit 20, a second low-pass filter circuit 30, and a second differential output circuit 40 to form a sine-wave processing unit 106; and the third detection circuit 10 is connected in series with a third inverting amplifier circuit 20, a third low-pass filter circuit 30, and a third differential output circuit 40 to form a cosine-wave processing unit 107.

The detection circuit 10 is an instrumentation amplifier 11, or a circuit equivalent to the instrumentation amplifier comprising a detection amplifier and a detection resistor, and outputs the single-ended signal based on a detection circuit potential Vg within the resolver signal detection circuit 100.

The inverting amplifier circuit 20 comprising: an input resistor R1 having one end connected to the detection circuit 10; an amplifier 21 having an inverting input terminal connected to an other end of the input resistor R1 and having a non-inverting input terminal connected to a detection circuit potential Vg within the resolver signal detection circuit 100; and a feedback resistor R3 having one end and an other end respectively connected to the inverting input terminal and an output terminal of the amplifier 21; and the feedback resistor R3 is a variable resistor.

The low-pass filter circuit 30 is a Butterworth filter circuit comprising a filter amplifier 31, filter resistors R5-R9 and capacitors C1,C2.

The differential output circuit 40 is a circuit 40a including a fully-differential amplifier 41, or a differential conversion circuit 40b comprising differential conversion amplifiers 42,43 and differential conversion resistors R31-R45, and includes an offset voltage input part 45,46 to apply an offset voltage Vos when converting the single-ended signal into the differential output signal.

A method for detecting resolver signals of the present invention comprises steps of: outputting an angle signal corresponding to a rotation angle of a motor from a resolver 80 comprising an excitation coil 5 and an output coil 6,7 to a resolver digital converter 90; inputting a pair of angle signals as a differential input signal from the output coil 6,7 of the resolver 80 into a detection circuit 10 via at least one pair of output branch lines 6c,6d;7c,7d of multiple pairs of branch lines 5c, 5d; 6c, 6d; 7c, 7d branched between the resolver 80 and the resolver digital converter 90, and outputting a single-ended signal from the detection circuit 10; amplifying or attenuating by an inverting amplifier circuit 20 connected to the detection circuit 10, the single-ended signal from the detection circuit 10; removing by a low-pass filter circuit 30 connected to the inverting amplifier circuit 20, noise from the single-ended signal amplified or attenuated by the inverting amplifier circuit 20; and converting by a differential output circuit 40 connected to the low-pass filter circuit 30, the single-ended signal noise-removed by the low-pass filter circuit 30 into a differential output signal, and outputting the differential output signal from the differential output circuit 40.

### ADVANTAGEOUS EFFECTS OF INVENTION

The resolver signal detection circuit of the present invention can obtain the angle signal (detected resolver signals) as motor rotation angle information at the outside of the resolver unit while normally operating the motor and the resolver unit of an electric vehicle, and can accurately evaluate the motor output performance. The present invention also makes it possible to non-destructively separate and detect the angle signal while driving an automobile equipped with the motor, and to obtain the useful driving data by measuring the motor rotation angle and speed together with data on noise, vibration, road surface condition, torque, etc. during driving the automobile.

### BRIEF DESCRIPTION OF DRAWING

FIG. 1 is a block diagram showing a resolver signal detection circuit;
FIG. 2 is a circuit diagram showing the resolver signal detection circuit;
FIG. 3 is a circuit diagram showing an embodiment of a detection circuit;
FIG 4 is a circuit diagram showing an embodiment of a differential output circuit;
FIG 5 is a waveform diagram showing a detected resolver signal processed by the resolver signal detection circuit;
FIG. 6 is a waveform diagram showing a resolver signal detected by a conventional detection method (single line branch detection with a common ground);
FIG 7 is a waveform diagram showing a resolver signal detected by a conventional detection method (differential probe detection); and
FIG. 8 is a schematic diagram showing a resolver unit.

### DESCRIPTION OF EMBODIMENTS

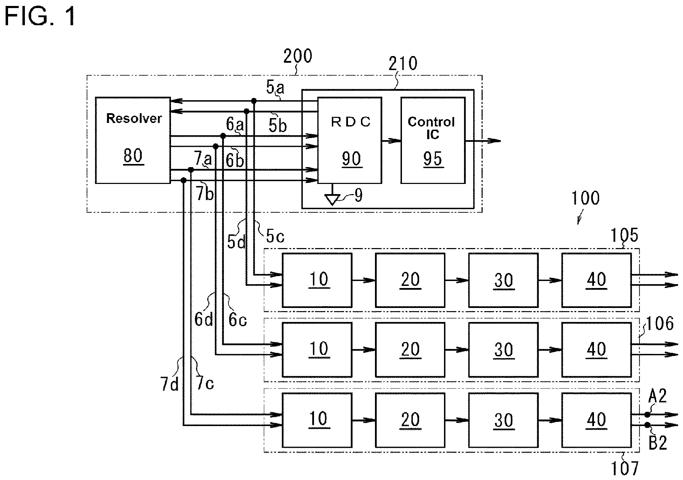

Embodiments of resolver signal detection circuits of the present invention are described with reference to FIGS. 1 to 8. The following embodiments are examples and do not limit the technical scope of the present invention.

FIG. 1 is a block diagram that outlines the resolver signal detection circuit 100 of the invention connected to and branched from a resolver unit 200. The resolver signal detection circuit 100 shown in FIG. 1 comprises: multiple pairs of branch lines 5c, 5d; 6c, 6d; 7c, 7d branched from signal lines 5a, 5b; 6a, 6b; 7a, 7b between a resolver 80 and a resolver digital converter (RDC) 90; and four stages of circuits, namely a detection circuit 10, an inverting amplifier circuit 20, a low-pass filter circuit 30, and a differential output circuit 40.

The first-stage detection circuit 10, from between the resolver 80 and an engine control unit (ECU) 210, inputs a pair of angle signals as a differential signal via at least one pair of output branch lines 6c,6d;7c,7d of the multiple pairs of branch lines 5c,5d;6c,6d;7c,7d and inputs a pair of excitation signals as a differential signal via another pair of branch lines (excitation branch lines) 5c, 5d from the RDC 90, and outputs a single-ended signal. The detection circuit 10 is capable of detecting resolver signals including the angle signal without affecting the electric current of the control resolver signals in the resolver unit 200. With respect to the resolver signals consisting of the excitation signal, a sine-wave signal (including sine and carrier waves) and a cosine-wave signal (including cosine and carrier waves), in this specification, the signal(s) separated and detected by the branch lines 5c, 5d; 6c, 6d; 7c, 7d is referred to as the detected resolver signal(s), and the signal(s) input into and output from the RDC90 is referred to as the control resolver signal(s). In the resolver signals, the signal (s) including the rotation angle information (sine-wave and cosine-wave signals) is referred to as the angle signal (s) .

The second-stage inverting amplifier circuit 20 is connected to the detection circuit 10 and amplifies or attenuates the single-ended signal from the detection circuit 10 to an arbitrary amplitude. The third-stage low-pass filter circuit 30 is connected to the inverting amplifier circuit 20 and removes high-frequency noise from the single-ended signal amplified or attenuated by the inverting amplifier circuit 20. The fourth-stage differential output circuit 40 is connected to the low-pass filter circuit 30 and converts the single-ended signal noise-removed by the low-pass filter circuit 30 into a differential signal to be output from the differential output circuit 40. This makes the detected resolver signals including the angle signal available outside the resolver unit 200.

The resolver 80 for outputting the angle signal corresponding to the rotation angle of the motor is the 1-phase excitation 2-phase output resolver 80 (FIG. 8), and comprises: the excitation coil 5 to supply the excitation signal as the carrier wave from the RDC 90; the sine-wave coil (output coil) 6 to output as the angle signal the sine-wave signal carrying on the carrier wave the sine wave dependent on the rotation angle to the RDC 90; and the cosine-wave coil (output coil) 7 to output the cosine-wave signal as the angle signal to the RDC 90; wherein the cosine-wave signal carries on the carrier wave the cosine wave substantially 90° phase shifted from the sine wave included in the sine-wave signal of the sine-wave coil 6. A 2-phase excitation 1-phase output resolver (not shown) may be used in place of the 1-phase excitation 2-phase output resolver.

As shown in FIG. 1, the multiple pairs of branch lines 5c,5d;6c,6d;7c,7d branched from signal lines 5a,5b;6a,6b;7a,7b between the resolver 80 and the RDC 90 comprises: the pair of excitation branch lines 5c, 5d to branch the excitation signal to be input into the excitation coil 5 from the RDC 90; the pair of sine-wave branch lines 6c,6d as a pair of output branch lines to branch the sine-wave signal to be input from the sine-wave coil 6 into the RDC 90; and the pair of output branch lines 7c,7d as a pair of output branch lines to branch the cosine signal to be input from the cosine-wave coil 7 into the RDC 90. This allows the present embodiment to normally operate the resolver 80 and the RDC 90 without having any negative effect on the control resolver signals (excitation, sine-wave and cosine-wave signals for controlling the motor) between the resolver 80 and RDC 90, and via each pair of excitation, sine-wave and cosine-wave branch lines 5c,5d;6c,6d;7c,7d, the excitation, sine-wave and cosine-wave signals are capable of being extracted as the detected resolver signals with high accuracy at the outside of the resolver unit 200. In particular, if the resolver signal is separated from the excitation signal lines 5a, 5b using the prior arts (the single line branch detection with common ground and the differential probe detection), the excitation signal is affected in the signal lines 5a, 5b by current drop and noise, etc., making it impossible to excite the excitation coil 5 and to output the normal angle signal from the resolver 80. In contrast, the present embodiment has the pair of excitation branch lines 5c, 5d as shown in FIG. 1, and the excitation signal is input as the differential signal from the RDC 90 into the high-impedance detection circuit 10 via the excitation branch lines 5c, 5d, thus avoiding the drawback of the prior art that prevents the excitation of the excitation coil 5.

In the resolver signal detection circuit 100 shown in FIG. 1, the detection circuit 10 comprises: a first detection circuit 10 connected to the excitation coil 5 via the pair of excitation branch lines 5c, 5d; a second detection circuit 10 connected to the sine-wave coil 6 via the pair of sine-wave branch lines 6c,6d; and a third detection circuit 10 connected to the cosine-wave coil 7 via the pair of cosine-wave branch lines 7c, 7d. In the resolver signal detection circuit 100, a first inverting amplifier circuit 20, a first low-pass filter circuit 30, and a first differential output circuit 40 are connected in series to the first detection circuit 10 to constitute an excitation processing unit 105; and a second inverting amplifier circuit 20, a second low-pass filter circuit 30, and a second differential output circuit 40 are connected in series to the second detection circuit 10 to constitute a sine-wave processing unit 106; and a third inverting amplifier circuit 20, a third low-pass filter circuit 30, and a third differential output circuit 40 are connected in series to the third detection circuit 10 to constitute a cosine-wave processing unit 107.

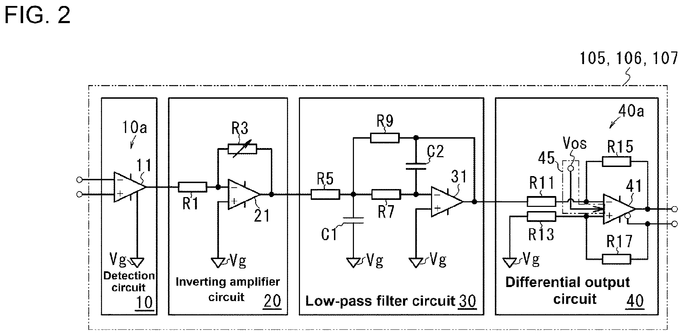

FIG. 2 illustrates a specific circuit diagram of the resolver signal detection circuit 100. Each inner configuration of the excitation processing unit 105, the sine-wave processing unit 106, and the cosine-wave processing unit 107 is substantially identical electrically and mechanically, thus achieving the simple circuit configuration and reducing the manufacturing costs. For simplicity, only one inner configuration of these processing units 105,106,107 is illustrated in FIG. 2, and the following is simply indicated as "detection circuit 10", "inverting amplifier circuit 20", "low pass filter circuit 30", and "differential output circuit 40", with omitting the wordings "first," "second," and "third".

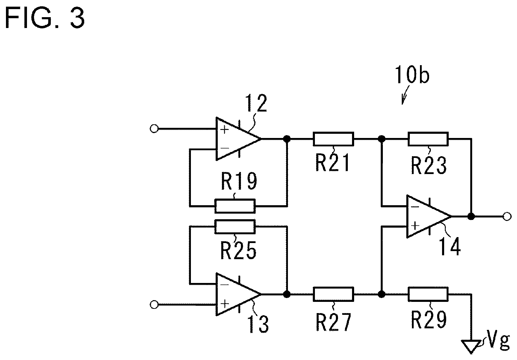

The detection circuit 10,10a shown in FIG. 2 is an instrumentation amplifier 11 to input the differential signal (detected resolver signals) from the resolver 80 via the pair of branch lines 5c, 5d; 6c, 6d; 7c, 7d to two input terminals of the instrumentation amplifier 11, and based on a detection circuit electric potential Vg in the resolver signal detection circuit 100, the single-ended signal is output from an output terminal of the instrumentation amplifier 11. The instrumentation amplifier 11 should have an attenuation function in consideration of the case that amplitudes of the detected resolver signals are large. The instrumentation amplifier 11 shown in FIG. 2 (and a circuit 10b in FIG. 3 discussed below corresponding to the instrumentation amplifier 11) separates and detects a weak angle signal outside the resolver unit 200 while minimizing the electric current flow from the resolver 80 to the detection circuit 10 due to the high input impedance characteristics. In addition, the detection circuit 10 outputs the single-ended signal with reference to the detection circuit electric potential Vg that is within the resolver signal detection circuit 100, but does not share a reference potential with the ground 9 of the resolver unit 200. Therefore, in this embodiment, the angle signal can be detected separately while normally operating the resolver unit 200, avoiding the current drop in the resolver unit 200, and avoiding the noise generation due to the common ground 9.

In this embodiment, the angle signal is directly input into the instrumentation amplifier 11 in FIG. 2 (or into detection amplifiers 12,13 in FIG. 3 described below) to achieve the high impedance input. Regarding the input impedance, an operational amplifier is ideally infinite, and is actually several hundred MΩ to several hundred GΩ. This value is sufficiently large compared to the input/output impedance (several hundred Ω) of the resolver 80 and the RDC 90, and due to the high impedance, the detection circuit 10, 10a, 10b in this embodiment separates and detects the angle signal as a stray signal with less electric current, and does not affect the control resolver signals in the resolver 80 and the RDC 90.

FIG. 3 shows as another embodiment of the detection circuit 10, a circuit 10b (3-amplifiers differential amplifier circuit) corresponding to the instrumentation amplifier 11, comprising detection amplifiers (operational amplifiers) 12-14 and detection resistors (resistors) R19-R29. Specifically, the circuit 10b comprises two operational amplifiers 12,13 with each non-inverting input terminal for inputting the differential signal (detected resolver signals) via the pair of branch lines 5c,5d;6c,6d;7c,7d, and each output terminal of the operational amplifiers 12,13 is feedback-connected to inverting input terminals via resistors R19,R25 respectively and is connected to a pair of input terminals of an operational amplifier 14 via resistors R21,R27 respectively. The output terminal of operational amplifier 14 is feedback-connected to an inverting input terminal thereof via resistor R23, and a non-inverting input terminal of the operational amplifier 14 is connected to the detection circuit potential Vg via resistor R29. Although FIG. 3 shows the circuit 10b of three operational amplifiers 12-14, a circuit corresponding to the instrumentation amplifier 11 may be configured with two operational amplifiers (2-amplifiers differential amplifier circuit) (not shown), which are capable of reducing the number of components and the cost.

The inverting amplifier circuit 20 shown in FIG. 2 comprises: an input resistor R1 having one end connected to the detection circuit 10; an amplifier (operational amplifier) 21 having an inverting input terminal connected to the other end of the input resistor R1 and a non-inverting input terminal connected to the detection circuit potential Vg within the resolver signal detection circuit 100; and a feedback resistor R3 having both ends connected to the inverting input terminal and an output terminal of the operational amplifier 21; and the feedback resistor R3 is a variable resistor. The inverting amplifier circuit 20 amplifies or attenuates an amplitude of the single-ended signal from the detection circuit 10, using a ratio of amplification (-R1/R3) that divides a value of the input resistor R1 by a value of the feedback resistor R3 and inverts the positive or negative value. The amplitude of signal output from the inverting amplifier circuit 20 can be controlled by adjusting a resistance value of the feedback resistor R3 and changing to the appropriate ratio of amplification. The single-ended signal from an output of the detection circuit 10 to an input of the differential output circuit 40 is amplified by the inverting amplifier circuit 20 based on a reference potential Vg within the resolver signal detection circuit 100 to determine an amplitude of an output signal from the differential output circuit 40.

The low-pass filter circuit 30 shown in FIG. 2 is a noise reduction circuit and is a multiple feedback low-pass filter circuit, comprising: a filter amplifier (operational amplifier) 31; filter resistors (resistors) R5-R9; and capacitors C1,C2; and is a second order Butterworth filter circuit. Specifically, as shown in FIG. 2, the low-pass filter circuit 30 comprises: a resistor R5 having one end connected to the inverting amplifier circuit 20; resistors R7, R9 having each one end connected to the other end of the resistor R5; a capacitor C1 connected to the other end of the resistor R5; a capacitor C2 having one end connected to the other end of the resistor R9; and an operational amplifier 31 having an inverting input terminal connected to each of other ends of the resistor R7 and the capacitor C2. An output terminal of the operational amplifier 31 is feedback-connected to the inverting input terminal of the operational amplifier 31 via resistors R9,R7 and via the capacitor C2. A non-inverting input terminal of the operational amplifier 31 and the other end of the capacitor C1 are each connected to the reference potential Vg. An order of the low-pass filter circuit, which is determined by the number of stages of an integration circuit including resistors and capacitors, is not limited to the second order shown in FIG. 2 and may be any order higher than the first order. Also, the low-pass filter circuit 30 is not limited to an active filter as the operational amplifier 31, and may also be a passive filter comprising a resistor, a capacitor, and an inductor.

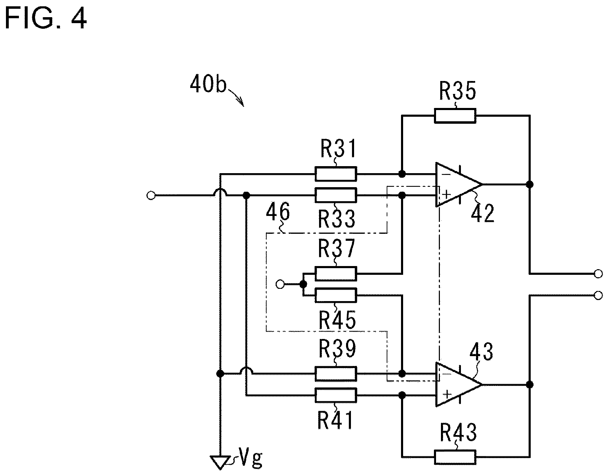

The differential output circuit 40 shown in FIG. 2 is a circuit 40a including a fully-differential amplifier 41 comprising: specifically, a resistor R11 having one end connected to the low-pass filter circuit 30; and a resistor R13 having one end connected to the detection circuit potential Vg; and the fully-differential amplifier 41 having an inverting input terminal and a non-inverting input terminal connected to each of other ends of the resistors R11,R13. Two output terminals of the fully-differential amplifier 41 are each feedback-connected to its inverting and non-inverting input terminals via the resistors R15, R17. As a result, the circuit 40a including the fully-differential amplifier 41 (and a differential output circuit 40b in FIG. 4 described below) is capable of restoring as the detected resolver signals, a differential signal the same as the resolver signals of the resolver unit 200 at the outside of the resolver unit 200. Also, the circuit 40a, 40b includes an offset voltage input part 45,46 to apply an offset voltage (adjustment voltage) Vos to the fully-differential amplifier 41 (and differential conversion amplifiers 42,43) when converting a single-ended signal from the low-pass filter circuit 30 into the differential signal. The application of the offset voltage Vos from the offset voltage input part 45,46 allows the differential signal to be directly input into a single power supply driven RDC not shown, which is connected to the following stage of the differential output circuit 40, and is capable of accurately measuring the rotation angle.

FIG. 4 shows as another embodiment of the differential output circuit 40, the differential output circuit 40b comprising a differential conversion amplifier (operational amplifier) 42,43 and differential conversion resistors (resistors) R31-R45. Specifically, the differential output circuit 40b comprises: resistors R33,R41 each having one end connected to the low-pass filter circuit 30; resistors R31,R39 each having one end connected to the detection circuit potential Vg; an operational amplifier 42 having inverting and non-inverting input terminals each connected to other ends of the resistors R31, R33; and an operational amplifier 43 having inverting and non-inverting input terminals each connected to the resistors R39,R41. An output terminal of the operational amplifier 42 is feedback-connected to the inverting input terminal of the operational amplifier 42 via a resistor R35, and an output terminal of the operational amplifier 43 is feedback-connected to the non-inverting input terminal of the operational amplifier 43 via a resistor R43. The differential conversion circuit 40b also comprises an offset voltage input part 46 in which the non-inverting and inverting input terminals of the operational amplifiers 42,43 are connected to an offset power supply via resistors R37,R45.

A gain of the circuit 40a including the fully-differential amplifier 41 is set by values of the resistors R11-R17, and a gain of the differential conversion circuit 40b is set by values of the resistors R31,R35,R41,R43. It is preferable to use the differential output circuit 40 of the fixed gain having packaged resistors because the highly accurate impedance matching is required between the differential output circuit 40 and an output destination thereof. Although the next stage of the resolver signal detection circuit 100 is not shown in FIGS. 1 and 2, the differential output circuit 40 is connected to the RDC not shown to calculate values of the rotation angle and the rotation speed of a target motor.

In the differential output circuit 40b in FIG. 4, the two operational amplifiers 42, 43 are arranged in parallel, but as another embodiment, a differential output may be obtained by a circuit that comprises two first and second operational amplifiers in series (not shown). Specifically, an output of the first operational amplifier is used as one differential output and an input of the second operational amplifier, and an output of the second operational amplifier is used as the other differential output. The differential output circuits 40, 40a, 40b shown in FIGS. 2 and 4 comprise the offset voltage inputs 45, 46, however, the application of the offset voltage Vos by the differential output circuit 40,40a,40b is not necessary in the case, for example that an angle calculation is performed using a calculation function of a data logger or a high-performance oscilloscope, or that an angle signal data is acquired by a personal computer (PC) to lately perform the calculation.

The following is an embodiment of a method for detecting resolver signals according to the present invention.

In the method for detecting resolver signals, as a normal operation of a resolver unit 200 for measuring a rotation angle, a resolver digital converter (RDC) 90 supplies an excitation signal to an excitation coil 5 of a resolver 80, and the resolver 80 outputs, from output coils 6, 7 to the RDC 90, the angle signal corresponding to the rotation angle of a motor. Specifically, the resolver 80 outputs from the sine-wave coil 6 of the output coil, a sine-wave signal that contains a carrier wave of the same frequency as the excitation signal and that contains a sine wave dependent on the rotation angle of the resolver 80, and outputs from the cosine-wave coil 7 of the output coil, a cosine-wave signal that contains a carrier wave of the same frequency as the excitation signal and that contains a cosine wave substantially 90° phase shifted from the sine wave of the sine-wave signal.

The first-stage detection circuit 10 shown in FIG. 2 separates and detects the resolver signals including a pair of angle signals as a differential signal via multiple pairs of branch lines 5c, 5d; 6c, 6d; 7c, 7d shown in FIG. 1 branched from signal lines 5a,5b;6a,6b;7a,7b between the resolver 80 and the RDC90. Specifically, the excitation signal input from the RDC 90 to the excitation coil 5 is separated and detected via a pair of excitation branch lines 5c, 5d, and the sine-wave signal input from the sine-wave coil 6 to the RDC 90 is separated and detected via a pair of sine-wave branch lines 6c, 6d, and the cosine-wave signal input from coil 7 into the RDC 90 is separated and detected via a pair of cosine-wave branch lines 7c,7d. In the detection circuit 10, a single-ended signal is output, for example as a gain setting 1, by an instrumentation amplifier 11, 10a or by a circuit 10b comprising detection amplifiers 12-14 and detection resistors R19-R29.

The second-stage inverting amplifier circuit 20 shown in FIG. 2 inputs the single-ended signal from the preceding-stage detection circuit 10, and the single-ended signal is input to an inverting input terminal of an amplifier (operational amplifier) 21 via an input resistor R1. An output signal of the operational amplifier 21 is negative-feedbacked via a variable resistor R3, and the inverting amplifier circuit 20 outputs the single-ended signal amplified or attenuated to a desired ratio of amplification (-R1/R3).

The third-stage low-pass filter circuit (Butterworth circuit) 30 shown in FIG. 2 removes the high-frequency noise from the amplified or attenuated single-ended signal inputted from the preceding-stage inverting amplifier circuit 20 connected to the low-pass filter circuit 30. The low-pass filter circuit 30, like the preceding-stage inverting amplifier circuit 20, comprises an inverting circuit, and therefore, the single-ended signal output from the low-pass filter circuit 30 is returned to a non-inverting signal. In the low-pass filter circuit 30, the cutoff characteristics (cutoff frequency) and the phase characteristics (phase change) are capable of being set by filter resistors R5,R7,R9 and capacitors C1,C2. The cutoff frequency refers to the frequency at which a signal pass gain decreases 3dB from a passband, and the phase change refers to the phase difference between the input and output signals. In this embodiment, for example, each resistance value of R5,R7 and R9 is 5.6kΩ, 12kΩ and 5.6kΩ, and each capacitance of the capacitors C1 and C2 is 680pF and 220pF, and the cutoff frequency (=1/(2π(C1·C2· R7· R9)^{0.5}) is set to 50kHz, and the phase change (phase delay) at 50kHz of the cutoff frequency is set to -90°. Also, based on the rotation speed 2000 rpm (electric angle frequency 330 Hz) of the resolver 80, it is designed such that the phase change is suppressed to 0.1° or less at a frequency 400Hz of signal. Further, to ensure a conversion accuracy of the RDC following the resolver signal detection circuit 100, it is designed such that the phase change is suppressed to 40° or less at a typical frequency 10kHz of the excitation signal.

The fourth-stage differential output circuit 40 shown in FIG. 2 inputs the single-ended signal noise-removed by the preceding-stage low-pass filter circuit 30 connected to the differential output circuit 40 to an inverting input terminal of a fully-differential amplifier (operational amplifier) 41 via a resistor R11, and converts the noise-removed single-ended signal into a differential signal, and outputs the differential signal corresponding to the that of a resolver unit 200 from an output terminal of the operational amplifier 41 to the RDC (not shown). The RDC calculates actual values of the rotation angle and the rotation speed based on the output differential signal, but since the rotation angle, etc. cannot be accurately calculated with a 0V-centered differential signal, an offset voltage Vos (e.g. 2.5V) can be applied in the differential output circuit 40. The rotation angle and other numerical values calculated in the RDC are transmitted as digital signals (serial signals, parallel signals, etc.) and speed pulses (ABZ phase signals for an encoder, etc.) to a control IC, a measurement IC, etc. (not shown) to be capable of evaluating a motor control.

The above embodiments illustrate differential output circuits 40, 40a, 40b, but the single-ended signal may be output directly from the low-pass filter circuit 30 to calculate a value of the rotation angle using an oscilloscope, a PC, etc.

A voltage waveform of the angle signal (cosine-wave signal) output from the resolver 80 and an error reporting from RDC 90 are explained below by contrasting examples of the present invention with comparisons of the prior art. In the examples and the comparisons, the cosine-wave signal is evaluated, and it is thought that the evaluation results for the excitation signal and the sine-wave signal is also the same as those for the cosine-wave signal because three pairs of signal lines 5a, 5b; 6a, 6b; 7a, 7b are identical to each other, and three pairs of branch lines 5c, 5d; 6c, 6d; 7c, 7d are identical to each other, and the excitation signal, sine-wave signal and cosine-wave processing units 105,106,107 have the same circuit configuration each other.

### [Evaluation System]

An example evaluation system is configured by connecting an RDC (U6805 manufactured by TAMAGAWA SEIKI CO., LTD.) not shown as the following stage of the resolver signal detection circuit 100 (FIGS. 1 and 2) of the present invention. On the other hand, a comparison evaluation system is the resolver unit 200 shown in FIG. 8 without the resolver signal detection circuit 100. Each resolver unit 200 of the example and comparison evaluation systems includes a resolver (manufactured by Tamagawa Seiki Co., Ltd.) 80 and an RDC (RDC-100 manufactured by ATSENSE INC.) 90. The RDC90 has functions such as a digital conversion of the resolver signal, a rotation angle output, a rotation speed output, and an error reporting (of signal degradation/signal loss).

### [Example 1]

In the example evaluation system (FIG. 1), a voltage waveform (angle signal) between measurement points A2 and B2 after processing the detected resolver signal in the resolver signal detection circuit 100 was measured by an oscilloscope (Example 1). Specifically, the differential signal between measurement points A2 and B2 after processing in the cosine-wave processing unit 107 was made into a single-ended signal by a differential input amplifier, isolated by an isolation amplifier, and measured by an oscilloscope via a BNC terminal without using a probe. To input into the RDC of the following stage of the resolver signal detection circuit 100, the variable resistor R3 of the inverting amplifier circuit 20 was adjusted so that a maximum output value of the resolver signal detection circuit 100 would be about 3.2 Vₚ₋ₚ.

### [Comparison 1]

In the comparison evaluation system (FIG. 8), a voltage waveform (angle signal) between measurement points A1 of a signal line 7a and G of RDC 90 ground 9, was measured by the oscilloscope using a passive probe (Comparison 1). The voltage waveform in Comparison 1 corresponds to a voltage waveform in the prior art detection method shown in the Patent Document 1, namely, the single line branch detection method that the signal line and an ECU have a common ground.

### [Comparison 2]

In the comparison evaluation system (FIG. 8), the voltage waveform (angle signal) between measurement points A1 and B1 of a pair of signal lines 7a,7b was measured by the oscilloscope using the differential probe (Comparison 2).

Example 1, Comparison 1 and Comparison 2 are considered to be measured in the substantially same position because: Example 1 measures between points A2 and B2 and is equivalent to measuring between points A1 and B1 via the resolver signal detection circuit 100; Comparison 1 measures point A1 with connecting the other to the measurement point G (ground 9); and Comparison 2 measures between points A1 and B1. Also, the voltage waveform between points A1 and B1 on the pair of signal lines 7a,7b corresponds to the voltage waveform of the control resolver signals. Therefore, it is possible to check whether or not there is any effect on the control resolver signals under the respective conditions by measuring each voltage waveform (the detected resolver signal including the angle signal) in Example 1 (the present invention), Comparison 1 (the single line branch detection with the common ground), and Comparison 2 (the differential probe detection).

### [Evaluation result: Example 1]

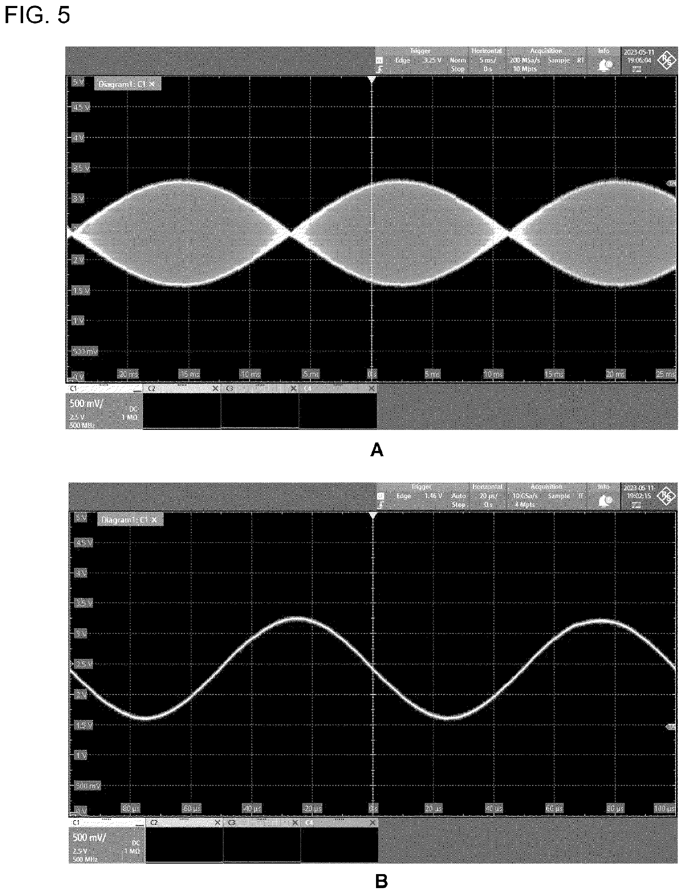

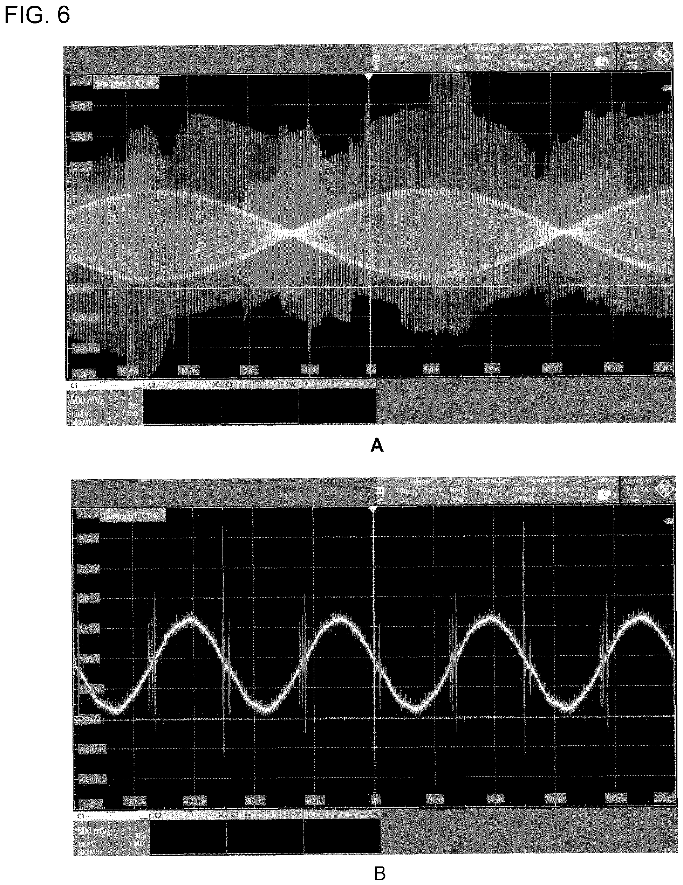

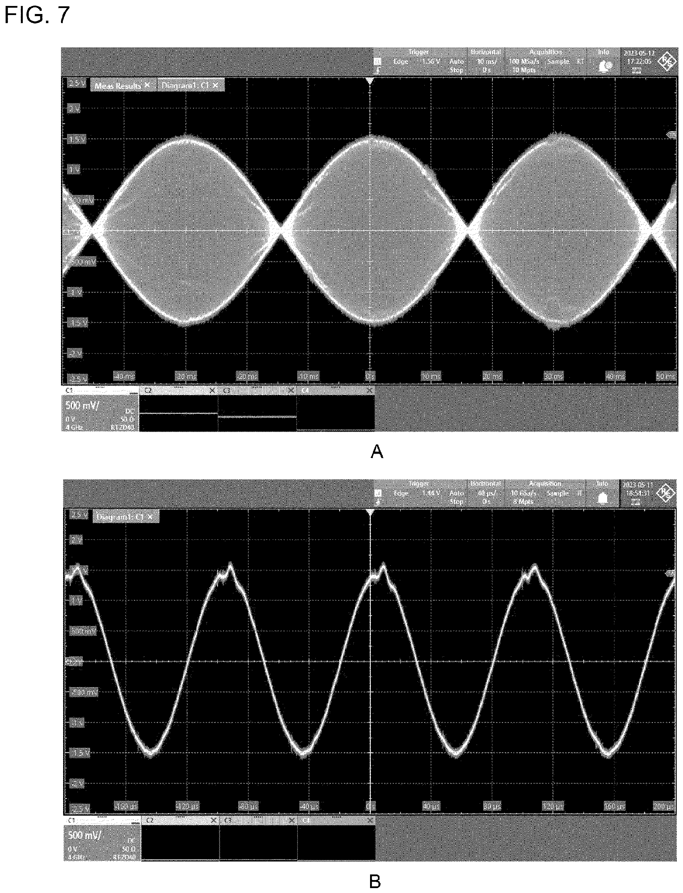

FIGS. 5A and 5B show voltage waveform diagrams for Example 1 (between measurement points A2 and B2). The horizontal axis is a time, and the vertical axis is a voltage value (the same as FIGS. 6 and 7). Clear cosine waves were measured in FIG. 5A (horizontal axis: -25ms to 25ms), and carrier waves with almost no noise were measured in FIG. 5B (horizontal axis: -100µs to 100µs) as an enlarged version of FIG. 5A. In Example 1, the RDC 90 did not report any error indicating that the signals were degraded or lost.

### [Evaluation result: Comparison 1]

FIGS. 6A and 6B show voltage waveform diagrams for Comparison 1 (between measurement points A1 and G). A lot of noise was measured in FIG. 6A (horizontal axis: -20ms to 20ms) and FIG. 6B (horizontal axis: -200µs to 200µs). In Comparison 1, the RDC 90 reported a high frequency of errors indicating that the signals were degraded by the noise.

### [Evaluation result: Comparison 2]

FIGS. 7A and 7B show voltage waveform diagrams for Comparison 2 (between measurement points A1 and B1). Relatively clear cosine-waves were measured as shown in FIG. 7A (the horizontal axis: -50ms to 50ms), and the noise was measured on the maximum parts of the carrier waves within the cosine-waves as shown in FIG. 7B (horizontal axis: -200µs to 200µs) as an enlarged version of FIG. 7A. In Comparison 2 as in Comparison 1, the RDC 90 reported the high frequency of errors indicating that the signals were degraded by the noise.

### [Consideration]

The reason why the noise represents in the voltage waveform for Comparison 1 (single line branch detection with the common ground) as shown in FIG. 6 is believed to be due to noise inflow from the ground 9 of point A1 which is common to that of the ECU 210. The noise represented in FIG. 7 in the voltage waveform of Comparison 2 (the differential probe detection) is believed to be caused by the noise inflow from the differential probe. It is thought that these noise inflows have degraded the signals and caused the RDC90 to report the signal degradation errors in Comparisons 1 and 2.

### [Conclusion]

In Example 1, the clear voltage waveforms were measured (FIG. 5) and the RDC 90 did not report the errors, and therefore, it has been confirmed that the resolver signal detection circuit 100 of the present invention can separate and detect the noise-removed clear angle signals without adversely affecting the control resolver signals input from and output to the RDC 90.

A lot of noise was measured in Comparison 1 (FIG. 6), and, the noise was measured in Comparison 2 (FIG. 7), and both had the high frequency of error reports from the RDC 90. Therefore, it has been confirmed that the prior arts of single line detection with common ground between point A1 and the ECU 210 (Comparison 1) and differential probe detection (Comparison 2) adversely affect the control resolver signals and cannot separate and detect the clear angle signals.

### INDUSTRIAL APPLICABILITY

The resolver signal detection circuit according to the present invention can be used to detect the signals of a device other than the resolver, such as a magnetic encoder, a differential signal communication, a Wheatstone bridges, etc., because the resolver signal detection circuit inputs a motor angle signal as a differential signal without affecting the control resolver signals of the resolver unit.

### REFERENCE SIGNS LIST

5..Excitation coil, 6..Output coil (Sine-wave coil), 7..Output coil (cosine-wave coil), 5c,5d..Branch line (Excitation branch line), 6c,6d..Branch line (Output branch line, Sine-wave branch line), 7c,7d..Branch line (Output branch line, Cosine-wave branch line), 10..Detection circuit (First detection circuit 10, Second detection circuit 10, Third detection circuit 10), 10a,11..Instrumentation amplifier, 10b..Circuit corresponding to instrumentation amplifier, 12,13,14..Detection amplifier (Operational amplifier), 20..Inverting amplifier circuit, 21..Amplifier (Operational amplifier), 30..Low pass filter circuit, 31..Filter amplifier (Operational amplifier), 40..Differential output circuit, 40a..Circuit including fully-differential amplifier, 41.. Fully-differential amplifier, 45,46..Offset voltage input part, 80..Resolver, 90..Resolver digital converter (RDC), 100..Resolver signal detection circuit, 105..Excitation processing unit, 106..Sine-wave processing unit, 107..Cosine-wave processing unit, 200..Resolver unit, C1,C2..Capacitor, R1..Input resistor (Resistor), R3..Feedback resistor (Resistor), R5-R9..Filter resistor (Resistor), R19-R29..Detection resistor (Resistor), Vg..Detection circuit potential.

## Claims

1. A resolver signal detection circuit comprising:
multiple pairs of branch lines branched from between a resolver and a resolver digital converter; the resolver comprising an excitation coil and an output coil, and the resolver digital converter receiving from the resolver an angle signal corresponding to a rotation angle of a motor;
a detection circuit that inputs a pair of angle signals as a differential input signal from the output coil of the resolver via at least one pair of output branch lines of the multiple pairs of branch lines and that outputs a single-ended signal;
an inverting amplifier circuit connected to the detection circuit and amplifying or attenuating the single-ended signal from the detection circuit;
a low-pass filter circuit connected to the inverting amplifier circuit and removing noise from the single-ended signal amplified or attenuated by the inverting amplifier circuit; and
a differential output circuit connected to the low-pass filter circuit and converting the single-ended signal noise-removed by the low-pass filter circuit into a differential output signal that is output from the differential output circuit.

2. The resolver signal detection circuit according to claim 1, wherein the multiple pairs of branch lines include a pair of excitation branch lines to branch an excitation signal that is input from the resolver digital converter into the excitation coil, and
wherein the excitation signal is input into the detection circuit as the differential input signal from the resolver digital converter via the pair of excitation branch lines.

3. The resolver signal detection circuit according to claim 1,
wherein the output coils comprise:
a sine-wave coil to output a sine-wave signal as the angle signal; and
a cosine-wave coil to output a cosine-wave signal as the angle signal that is substantially 90° phase shifted from the sine-wave signal of the sine-wave coil; and
wherein the multiple pairs of branch lines comprise:
a pair of excitation branch lines to branch an excitation signal that is input from the resolver digital converter into the excitation coil;
a pair of sine-wave branch lines as the pair of output branch lines to branch the sine-wave signal that is input from the sine-wave coil into the resolver digital converter; and
a pair of cosine-wave branch lines as the pair of output branch lines to branch the cosine-wave signal that is input from the cosine-wave coil into the resolver digital converter.

4. The resolver signal detection circuit according to claim 3,
wherein the detection circuit comprises:
a first detection circuit connected to the excitation coil via the pair of excitation branch lines;
a second detection circuit connected to the sine-wave coil via the pair of sine-wave branch lines; and
a third detection circuit connected to the cosine-wave coil via the pair of cosine-wave branch lines; and
wherein the first detection circuit is connected in series with a first inverting amplifier circuit, a first low-pass filter circuit, and a first differential output circuit to form an excitation processing unit;
wherein the second detection circuit is connected in series with a second inverting amplifier circuit, a second low-pass filter circuit, and a second differential output circuit to form a sine-wave processing unit; and
wherein the third detection circuit is connected in series with a third inverting amplifier circuit, a third low-pass filter circuit, and a third differential output circuit to form a cosine-wave processing unit.

5. The resolver signal detection circuit according to claim 1, wherein the detection circuit is an instrumentation amplifier, or a circuit equivalent to the instrumentation amplifier comprising a detection amplifier and a detection resistor, and outputs the single-ended signal based on a detection circuit potential within the resolver signal detection circuit.

6. The resolver signal detection circuit according to claim 1, wherein the inverting amplifier circuit comprising: an input resistor having one end connected to the detection circuit; an amplifier having an inverting input terminal connected to an other end of the input resistor and having a non-inverting input terminal connected to a detection circuit potential within the resolver signal detection circuit; and a feedback resistor having one end and an other end respectively connected to the inverting input terminal and an output terminal of the amplifier; and
wherein the feedback resistor R3 is a variable resistor.

7. The resolver signal detection circuit according to claim 1, wherein the low-pass filter circuit is a Butterworth filter circuit comprising a filter amplifier, filter resistors and capacitors.

8. The resolver signal detection circuit according to claim 1, wherein the differential output circuit is a circuit including a fully-differential amplifier, or a differential conversion circuit comprising differential conversion amplifiers and differential conversion resistors, and includes an offset voltage input part to apply an offset voltage Vos when converting the single-ended signal into the differential output signal.

9. A method for detecting resolver signals comprising steps of:
outputting an angle signal corresponding to a rotation angle of a motor from a resolver comprising an excitation coil and an output coil to a resolver digital converter;
inputting a pair of angle signals as a differential input signal from the output coil of the resolver into a detection circuit via at least one pair of output branch lines of multiple pairs of branch lines branched between the resolver and the resolver digital converter, and outputting a single-ended signal from the detection circuit;
amplifying or attenuating by an inverting amplifier circuit connected to the detection circuit, the single-ended signal from the detection circuit;
removing by a low-pass filter circuit connected to the inverting amplifier circuit, noise from the single-ended signal amplified or attenuated by the inverting amplifier circuit; and
converting by a differential output circuit connected to the low-pass filter circuit, the single-ended signal noise-removed by the low-pass filter circuit into a differential output signal, and outputting the differential output signal from the differential output circuit.
